# EUROPÄISCHE PATENTSCHRIFT

(11) **EP 2 613 139 B1**
(45) Veröffentlichungstag und Bekanntmachung des Hinweises auf die Patenterteilung: **15.08.2018**
(21) Anmeldenummer: 13150263.5
(22) Anmeldetag: 04.01.2013
(51) Int. Cl.: G01N 21/64, G01N 21/66, G01N 21/70, G01N 21/76

(54) **Verfahren zur Analyse von Proben und Systeme hierfür**
Method for the analysis of samples and systems thereof
Procédé destiné à l'analyse d'échantillons et système à cet effet

(30) Priorität: 05.01.2012 DE 102012100065
(43) Veröffentlichungstag der Anmeldung: 10.07.2013
(73) Patentinhaber: Frederic Laager S.U.P.E.R Lab, 26129 Oldenburg (DE)
(72) Erfinder: Laager, Frederic, 26129 Oldenburg (DE); Raning, Nils, 2560 Nidau (CH)
(74) Vertreter: Kröncke, Rolf

(56) Entgegenhaltungen:
- US-A1- 2008 272 312
- US-A1- 2011 105 346
- US-A1- 2011 223 655
- US-B1- 6 791 687
- W. YAN ET AL: "Combined bioluminescence and fluorescence imaging visualizing orthotopic lung adenocarcinoma xenograft in vivo", ACTA BIOCHIMICA ET BIOPHYSICA SINICA, Bd. 43, Nr. 8, 8. Juli 2011 (2011-07-08), Seiten 595-600, XP055058930, ISSN: 1672-9145, DOI: 10.1093/abbs/gmr054
- MOCANU J D, MORIYAMA E H, CHIA M C, LI J-H, YIP K W, HUANG D P, BASTIANUTTO C, WILSON B C, LIU F-F: "Combined in vivo bioluminescence and fluorescence imaging for cancer gene therapy", MOLECULAR IMAGING, Bd. 3, Nr. 4, 1. Oktober 2004 (2004-10-01) , Seiten 352-355, XP9168652,
- KEITH R MILLINGTON ET AL: "Chemiluminescence from thermal oxidation of amino acids and proteins", AMINO ACIDS ; THE FORUM FOR AMINO ACID AND PROTEIN RESEARCH, SPRINGER-VERLAG, VI, vol. 38, no. 5, 18 September 2009 (2009-09-18), pages 1395-1405, XP019805439, ISSN: 1438-2199

## Beschreibung

Die vorliegende Anmeldung richtet sich in einem ersten Aspekt auf ein Verfahren zur Analyse und Erkennung einer Probe oder von Eigenschaften einer Probe. Genauer betrifft dieses Verfahren eines bei dem die induzierte Lumineszenz der Probe nach Anregung sowie die Chemilumineszenz der Probe mit entsprechenden Mitteln auf verschiedenen Wellenlängen gemessen und in Beziehung miteinander gesetzt werden. Anschließend findet ein Vergleich der so erhaltenen Signatur der Probe mit Signaturen von bekannten Proben aus einer Datenbank statt, um ein Identifizieren oder Bestimmen der Probe oder Eigenschaften der Probe auf Basis der Signatur mit bekannten Signaturen von Proben aus einer Datenbank zu erlauben. Bei dem erfindungsgemäßen Verfahren handelt es sich um eines, das nicht auf Arrays oder sogenannte Chips, insbesondere keine DNA/RNA-Chips, durchgeführt wird. In einem weiteren Aspekt richtet sich die Anmeldung auf die Durchführung des erfindungsgemäßen Verfahrens unter Verwendung eines Computerprogramms, sowie auf Vorrichtungen und Systeme zur Durchführung des Verfahrens. Im Verfahren wird eine Datenbank enthaltend Signaturen von Proben auf Basis von Werten bestimmt durch Korrelation der Chemilumineszenz und/oder die induzierte Lumineszenz dieser Proben sowie durch Zuordnung von Eigenschaften und Merkmalen zu diesen Proben verwendet.

### Stand der Technik

Die Analyse von Proben, insbesondere biologischen Proben, spielt in verschiedenen Lebensbereichen eine wichtige Rolle. Analysen finden mit verschiedensten Verfahren statt. Eine Möglichkeit zur Analyse von Proben sind spektroskopische Verfahren.

Solche spektroskopischen Verfahren schließen Verfahren ein, bei dem elektromagnetische Strahlung, die von den Proben emittiert wird, gemessen wird. Solche elektromagnetischen Strahlungen können z. B. aufgrund von Chemilumineszenz oder der induzierten Lumineszenz nach Anregung auftreten. Chemilumineszenz ist ein Prozess, bei dem durch eine chemische Reaktion elektromagnetische Strahlung emittiert wird. Hierzu gehört die Biolumineszenz bei biologischen Systemen, aber auch die Reaktion von freien Radikalen. Eine Alternative hiervon ist die bei chemischer Umsetzung entstehende spontane Photonemission, z. B. bei der Umsetzung freier Radikale, wie reaktiver Sauerstoffspecies (reactive Oxygen Species (ROS)). Basis für die Chemilumineszenz ist der Übergang eines Elektrons aus einem angeregten Zustand in einen energetisch tiefer liegenden Zustand, wobei der angeregte Zustand bei der Chemilumineszenz durch eine chemische Reaktion erreicht wird.

Die induzierte Lumineszenz, ist die Emission elektromagnetischer Strahlung eines Objektes bei Anregung mit einer oder mehreren Wellenlängen. Alternativ kann die induzierte Lumineszenz auftreten, wenn eine chemische Anregung, eine mechanische Anregung oder eine elektrische Anregung erfolgt. Typischerweise wird die induzierte Lumineszenz einer Probe durch Anregung mit UV-Licht oder anderer elektromagnetischer Strahlung erreicht.

Eine Überprüfung von Eigenschaften von Produkten und ein Überwachen von Produkten werden auf verschiedenen Gebieten gefordert. So können Merkmale eines Produktes verwendet werden, um eine entsprechende Zuordnung zum Hersteller usw. zu erlauben. Im Qualitätskontrollbereich sind solche Analysen notwendig ebenso wie zur Überwachung von Nachahmungen, z. B. im Gesundheitsbereich. Eine Analyse von Proben wird auch bei der Bestimmung von Inhaltsstoffen einer Probe in verschiedensten Bereichen gewünscht. In Herstellungs- und Produktionsverfahren sind solche Analysen ebenfalls notwendig. Im Bereich der Lebensmittelüberwachung sind einfache und schnelle Methoden zur Analyse von Lebensmitteln hilfreich, um entsprechende Eigenschaften dieser Lebensmittel, z. B. Inhaltsstoffe aber auch Zustand und Verarbeitung bzw. Lagerung der Probe zu bestimmen.

Dabei ist es wichtig, kosteneffektive, einfache und im großen Maßstab durchführbare Verfahren bereitzustellen, die routinemäßig zur Analyse von Proben eingesetzt werden können. Diese möglichst automatisierten Verfahren erlauben, bei geringem Zeitaufwand die Proben zu identifizieren bzw. Eigenschaften dieser Proben zu erkennen.

Aus der EP 0 897 532 B1 ist ein automatisiertes Fingerprint-Verfahren bekannt. Dabei wird die Probe mit einem Standard verglichen und anschließend wird überprüft, inwieweit der erhaltene Fingerprint sich von einer Standardmischung unterscheidet. Die DE 10 2004 008 762 beschreibt ein Verfahren und eine Vorrichtung zur Detektion und zum Identifizieren von Biopartikeln, in dem erhaltene Raman-Spektren miteinander verglichen werden. Weiterhin wird dort eine Messung des Fluoreszenzlichtes der Partikel durchgeführt.

Eine Messung der induzierten Lumineszenz, wie insbesondere der Fluoreszenz, findet auch bei dem heutzutage weit verbreiteten Verfahren zur Bestimmung der Genaktivität bzw. zur Unterscheidung von genetischen Verbindungen mit DNA/RNA-Arrays statt. Hierbei findet allerdings keine direkte Messung der Probe statt, sondern nur eine mit Hilfe einer markierten Sonde.

Die Dokumente

US 2011/0223655 A1;

Yan et al., "Combined bioluminescence and fluorescence imaging visualizing orthotopic lung adenocarcinoma xenograft in vivo", Acta Biochim. Biophys. Sin. 2011, 43, 595-600; Mocanu et al., "Combined In Vivo Bioluminescence and Fluorescence Imaging for Cancer Gene Therapy", Mol. Imaging, 3(4), October 2004, 352-355;

Millington et al., "Chemiluminescence from thermal oxidation of amino acids and proteins", Amino Acids, 38, 2010, 1395-1405; und

US 6,791,687 B1 offenbaren jeweils die Analyse von Proben durch eine Kombination von Fluoreszenz- und Biolumineszenz-/Chemilumineszenz-Messungen. Es besteht aber nach wie vor ein Bedarf an neuen Verfahren, die kostengünstig, schnell und sicher Proben analysieren und damit eine Bestimmung dieser Proben bzw. Eigenschaften dieser Proben erlauben. Das Verfahren muss dabei geeignet sein, mit einem hohen Durchsatz durchgeführt zu werden.

Vorliegend werden geeignete Verfahren sowie Systeme hierfür bereitgestellt.

### Beschreibung der Erfindung

In einem ersten Aspekt richtet sich die vorliegende Anmeldung auf ein Verfahren zur Analyse und Erkennung einer Probe oder von Eigenschaften einer Progemäß den Definitionen von Anspruch 1. Vorliegend wurde festgestellt, dass durch in Beziehung setzen der Chemilumineszenzwerte und/oder der induzierten Lumineszenz-Werte einer Probe eine Signatur oder Fingerprint einer Probe erhalten wird. Die durch Messung der induzierten Lumineszenz und/oder Chemilumineszenz erhaltenen Werte, die an verschiedenen Messpositionen nach Anregung der Probe gemessen werden, werden dabei in Beziehung gesetzt, um einen für die Probe charakteristischen Fingerprint oder eine Signatur zu erhalten. Mit Hilfe geeigneter Mittel werden die einzelnen Messwerte dabei derart korreliert, dass die Signatur dieser Probe erhalten wird.

Das erfindungsgemäße Verfahren ist dabei eines, das nicht auf Basis von DNA und/oder RNA Arrays oder Chips basiert. Erfindungsgemäß erfolgt die Messung der induzierten Lumineszenz und der Chemilumineszenz direkt an der Probe. Insbesondere werden keine markierten Sonden benötigt, um die Messung zu erlauben.

Die induzierte Lumineszenz wird nach geeigneter Induktion über die Zeit gemessen. Darauf wird die Chemilumineszenz, d.h. bevorzugt die spontane nicht durch Zugabe von externen induzierenden Mitteln erhaltene Chemilumineszenz, bestimmt. Dabei erfolgt die Messung der induzierten Lumineszenz und der Chemilumineszenz bei verschiedenen Wellenlängen.

D.h., es werden entweder Messwerte der induzierten Lumineszenz oder der Chemilumineszenz von verschiedenen Messpunkten oder zu verschiedenen Messzeiten untereinander in Bezug gesetzt. Bevorzugt ist aber, dass erfindungsgemäß ein Messwert der induzierten Lumineszenz mit einem Messwert der Chemilumineszenz miteinander in Bezug gesetzt wird, um einen Wert zur Signatur bzw. als Trennwert zu ergeben.

Die so bestimmte Signatur der zu analysierenden Probe wird dann mit Signaturen von bekannten Proben aus einer Datenbank verglichen und erlaubt ein Identifizieren oder Bestimmen der Probe oder ein Identifizieren oder Bestimmen von Eigenschaften der Probe auf Basis der Übereinstimmung der erhaltenen Signatur der Probe mit Signaturen aus der Datenbank.

Die in der Datenbank vorliegenden Signaturen sind dabei solche, die Parameter und Eigenschaften bekannter Proben beinhalten. Diese Informationen schließen sowohl die chemischen Zusammensetzungen dieser bekannten Proben als auch Zustandseigenschaften dieser Proben ein. D. h., die Signatur erlaubt einerseits eine Zuordnung der Inhaltsstoffe, wie chemische Zusammensetzung, ein Vorliegen bestimmter Verbindungen etc.. Andererseits beinhaltet die Signatur auch Informationen zum Zustand der Probe, z. B. Frische, Verarbeitungszustand, Immunantwort des Gewebes usw., die z. B. im Lebensmittelbereich wichtig sind. D. h., die Signaturen in der Datenbank sind aus bekannten Proben auf Basis der Messung der induzierten Lumineszenz der Probe bei einer oder mehreren Wellenlängen nach Anregung bzw. und Messung der Chemilumineszenz der Probe einer oder bei mehreren Wellenlängen bestimmt.

Insbesondere sind die Signaturen derart aufgebaut, dass sie für eine Probe charakteristische Parameter aufweisen, die eine einfache Zuordnung gemessener Proben zu bekannten Proben erlaubt, z.B. durch Bestimmung von Trennwerten.

Bei dem erfindungsgemäßen Verfahren handelt es sich insbesondere um ein automatisiertes Verfahren zur Erkennung einer Probe oder Eigenschaften einer Probe.

In einer bevorzugten Ausführungsform ist das Verfahren eines, bei dem zur Bestimmung der Signatur eine Vielzahl von Werten über die Zeit bestimmt werden. Bei einer Bestimmung der Werte über die Zeit nimmt die induzierte Lumineszenz-Emission ab, während das Chemilumineszenz-Signal erhalten bleibt. Dadurch sind entsprechende Fingerprints oder Signaturen erhältlich.

Soweit nicht anders ausgeführt, werden die Ausdrücke "Fingerprint" und "Signatur" synonym verwendet.

Das erfindungsgemäße Verfahren ist eines, bei dem die Messung der Chemilumineszenz und der induzierten Lumineszenz mit Hilfe mehrerer Detektoren erfolgt. Die Signatur der Probe wird dabei derart erhalten, dass die Signale bzw. Messwerte der einzelnen Detektoren miteinander in Beziehung gestellt werden und die so erhaltenen Relativwerte aus Chemilumineszenz und/oder induzierten Lumineszenz berechnet werden. Diese Relativwerte von z. B. zwei verschiedenen Messwerten für die Chemilumineszenz entweder eines Detektors, wobei die verschiedenen Chemilumineszenz-Werte zu verschiedenen Zeitpunkten bestimmt werden oder Werte, die an zwei verschiedenen Detektoren der Chemilumineszenz zu gleichen oder verschiedenen Zeitpunkten bestimmt werden. Weiterhin ist es möglich, dass die Relativwerte solche sind, erhalten aus in Beziehung setzen von Chemilumineszenz und/oder induzierter Lumineszenz oder alleine von induzierten Lumineszenzsignalen bzw. alleine von Chemilumineszenzsignalen, wobei diese in geeigneter Weise von gleichen oder verschiedenen Detektoren zu gleichen oder verschiedenen Zeitpunkten stammen. Wobei die Werte der induzierten Lumineszenz durch Berechnungen angepasst werden können durch die Berechnung der Abklingkurve, der Abklingzeit oder der Maximalwerte.

Eine Darstellung hiervon findet sich in der beigefügten Tabelle 1.

Hierin wird unter dem Ausdruck "Relativwerte" solche Werte verstanden, die sich durch in Beziehung setzen von mindestens zwei Meßwerten ergeben.

Insbesondere sind die Relativwerte Werte, bei denen ein Quotient aus einem ersten Wert und einem zweiten Wert gebildet wird. Ggf. kann eine weitere Gewichtung der einzelnen Messwerte bzw. Relativwerte, z. B. durch entsprechende Faktoren, erfolgen.

Insbesondere bevorzugt erfolgt die Erstellung der Signatur mittels Erstellen von Trennwerten, mit Hilfe von neuronalen Netzwerken, mit Hilfe statistischer Analysen, mit einer Mustererkennung, einer Clusteranalyse und/oder Klassifizierungsverfahren, Support Vektor Maschinen oder anderen Methoden des überwachtem Lernen sowie nicht-überwachtem Lernen, Fractalanalysen oder anderen Klassifizierungssystemen, Quantifizierungssystemen oder Abstufungssystemen. Trennwerte sind dabei einseitig offene Werte, die geeignet sind, die Proben spezifisch zu charakterisieren.

Bei dem erfindungsgemäßen Verfahren werden insbesondere Proben analysiert, die aus dem Lebensmittelbereich stammen. Andere geeignete Proben sind pharmazeutische Proben oder aus dem Gesundheitsbereich. Alternativ können Gewebeproben oder Körperflüssigkeiten von Menschen oder Tieren, eukaryotisches oder prokaryotisches Lebewesen oder Teilen davon im Allgemeinen und insbesondere Kulturen hiervon sowie anderen organischen Materialien vorliegen. Natürlich fallen auch anorganische Materialien unter den Ausdruck Proben. Aber auch ganze Lebewesen (Menschen, Tiere, Pflanzen, Pilze) können analysiert werden.

Das Verfahren eignet sich nicht nur zur Bestimmung der Probe, z. B. Zuordnung der Probe zu einer bestimmten Species usw., sondern erlaubt auch, den Zustand der Probe zu bestimmen. Unter Zustand der Probe fällt insbesondere das Alter der Probe, die Vitalität, Energieverbrauch, z. B. bei Zellmaterialien, die zellulären Aktivitäten und den metabolischen Zustand von insbesondere lebenden Organismen in der Probe, aber auch die Pathologie von Gewebe oder Zellen sowie im Lebensmittelbereich z. B. Alter und Zustand der Probe in Bezug auf Frische, Haltbarkeit, Bearbeitungsverfahren, Inhaltsstoffe, Kontaminationsgrad usw.

Das erfindungsgemäße Verfahren ist dabei insbesondere eines, das nicht auf die Bestimmung der Eigenschaften auf Basis der DNA/RNA mit Hilfe von hybridisierenden Sonden beruht.

Des Weiteren eignet sich das Verfahren dazu, Gewebeproben oder Körperflüssigkeiten von Menschen oder Tieren zu untersuchen und hier den Zustand zu bestimmen, z. B. Lebend/Tod-Gewebe, benigner, maligner Zustand, usw.

Die erfindungsgemäß erstellte Signatur umfasst dabei bevorzugt neben den bestimmten Messwerten und hieraus bestimmten Relativwerten und insbesondere Trennwerten auch Informationen zu den Eigenschaften der Probe, wie z. B. physikalische Eigenschaften, chemische Eigenschaften, biologische Eigenschaften usw.

Durch Abgleich der für die zu analysierenden Probe erhaltenen Signatur mit Signaturen aus der Datenbank ist es möglich, einfach und schnell eine Zuordnung zu erreichen.

Die Messung von sowohl Chemilumineszenz als auch der induzierten Lumineszenz der Probe ermöglicht eine Charakterisierung und Parametrisierung der Probe und sich eine daraus ergebende Signatur dieser Probe, die im Abgleich in einer Datenbank vor den Signaturen eine schnelle und einfache Zuordnung erlaubt.

Die erfindungsgemäßen Verfahren können insbesondere im Sport- und Fitnessbereich eingesetzt werden, z. B. zur Messung von freien Radikalen; in der Lebensmittelindustrie, hier insbesondere in der Qualitätskontrolle, z. B. zur Überprüfung der Frische von Lebensmitteln, der Keimfreiheit und der Zusammensetzung in der Forschung und Entwicklung zur Qualitätskontrolle, z. B. im Bereich der Biotechnologie und biotechnologisch hergestellte Wirkstoffe. Schließlich erlaubt das erfindungsgemäße Verfahren einen Einsatz in der Medizintechnik, z. B. in diagnostischen Methoden, in der Qualitätskontrolle aber auch der Überwachung der Hygiene usw.

In einer Ausführungsform ist das erfindungsgemäße Verfahren eines, bei dem die zu messenden Proben zerstörungsfrei gemessen werden. Dadurch kann insbesondere Lebendmaterial gemessen werden im Gegensatz zu Chip-Technologie auf DNA- oder RNA-Basis. In einer Ausführungsform der Erfindung ist das Verfahren eines bei dem Lebendproben gemessen werden.

In einem weiteren Aspekt wird im erfindungsgemäßen Verfahren ein Computerprogramm mit Programmcodemitteln, insbesondere auf einem maschinenlesbaren Träger gespeichert, verwendet. Dieses insbesondere auf einem maschinenlesbaren Träger gespeicherte Computerprogramm mit Programmcodemitteln ist in der Art eingerichtet, dass es zur Durchführung des erfindungsgemäßen Verfahrens geeignet ist, wenn das Computerprogramm auf einem oder mehreren Rechnern ausgeführt wird.

Weiterhin kann das erfindungsgemäße Verfahren die Verwendung eines computerlesbaren Speichermediums enthaltend Programmanleitungen zur Durchführung des erfindungsgemäßen Verfahrens umfassen. Dem Fachmann sind übliche Vorrichtungen hierzu bekannt.

In einem weiteren Aspekt bezieht sich die Anmeldung auf ein System zur Analyse und/oder Erkennung einer Probe oder Eigenschaften einer Probe gemäß Anspruch 11. Dieses erfindungsgemäße System umfasst dabei eine Vorrichtung zur Messung der induzierten Lumineszenz und eine Vorrichtung zur Messung der Chemilumineszenz einer Probe und eine Datenverarbeitungseinheit umfassend eine Software oder ein Computerprogramm zur Durchführung des erfindungsgemäßen Verfahrens. Hiermit werden entsprechende Signaturen der Probe erhalten. Die Datenverarbeitungseinheit erlaubt weiterhin einen Vergleich der erhaltenen Signatur mit bekannten, in der Datenbank hinterlegten Signaturen. Weiterhin kann das System entsprechende Mittel zur Anregung der Probe aufweisen, wie entsprechende Quellen zur Ausstrahlung elektromagnetischer Strahlung. Bevorzugt ist diese Einrichtung eine Quelle für UV-Licht, z. B. ein Laser oder durch LEDs. Die Datenbank enthält Signaturen von Proben, diese Signaturen sind erstellt auf Basis von Werten bestimmt durch Korrelation von Chemilumineszenz- und/oder induzierten Lumineszenzwerten dieser Probe sowie ggf. durch Zuordnung von Eigenschaften und Merkmalen zu dieser Probe.

Diese Datenbank enthält sowohl Daten und Informationen zu den Relativwerten als auch Daten und Informationen zu Eigenschaften der bestimmten Probe. Diese Datenbank dient als Grundlage zur Verifizierung und Erkennung der zu analysierenden Probe mit Hilfe von geeigneten Verfahren, wie unter Zugrundelegung von Verfahren mit Erstellen von Trennwerten, neuronalen Netzwerken, statistischen Analysen, Mustererkennung, Clusteranalyse oder Klassifizierungsverfahren.

Das erfindungsgemäße Verfahren und das erfindungsgemäße System sind insbesondere geeignet, zerstörungsfrei die Proben zu analysieren und somit ggf. im laufenden Betrieb eine Qualitätskontrolle zu ermöglichen.

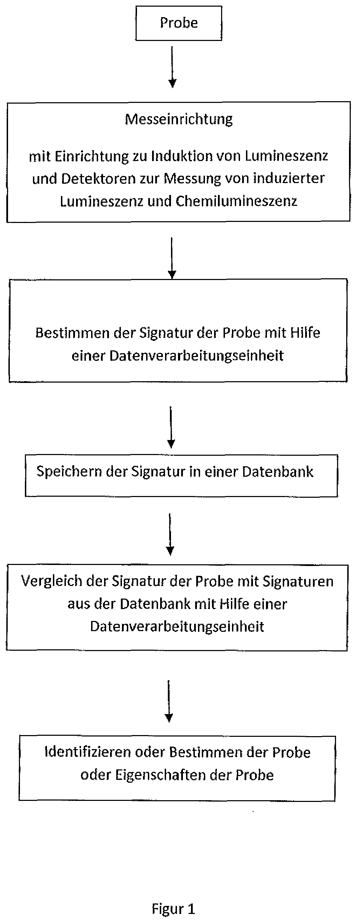

Das erfindungsgemäße Verfahren wird in der Figur 1 mit Hilfe eines Fließdiagramms näher erläutert. Die Probe wird mit Hilfe einer Vorrichtung zur Emission von elektromagnetischer Strahlung einer oder mehrerer Wellenlängen angeregt, oder mit anderen physikalischen oder chemischen Methoden. Des Weiteren wird die Chemilumineszenz der Probe ohne Hilfsmittel gemessen. Mit Hilfe von Detektoren (z.B. Photomultiplier tubes, charge-coupled device camera oder avalanche Dioden) wird die Emission der induzierten Lumineszenz bei einer oder mehreren Wellenlängen sowie die Chemilumineszenz bei einer oder mehreren Wellenlängen gemessen. Bevorzugt erfolgt dabei die Messung von sowohl induzierter Lumineszenz als auch Chemilumineszenz über die Zeit.

In der Datenverarbeitungseinheit werden die Messwerte in Beziehung gesetzt und Relativwerte bestimmt. Diese Relativwerte werden ggf. weiterhin mit verschiedenen bekannten Analyseverfahren gewertet und parametrisiert. Mit Hilfe der Datenverarbeitungseinheit wird eine Signatur der Probe bestimmt. In der Datenverarbeitungseinheit wird diese Signatur dann mit Signaturen bekannter Proben auf einer Datenbank verglichen. Gegebenenfalls über eine Ausgabeeinheit wird dann auf Basis der Übereinstimmung der erhaltenen Signatur mit Signaturen aus der Datenbank die Probe bestimmt bzw. Eigenschaften der Probe angezeigt.

**Tabelle 1**

| + | Detektor 1 | Detektor 2 | Detektor 3 | Detektor 4 | Detektor 5 | Detektor 6 | Detektor 7 |
|---|---|---|---|---|---|---|---|
| Detektor 1 | 1 | ▪ Detektor 2 / Detektor 1 | ▪ Detektor 3 / Detektor 1 | ▪ Detektor 4 / Detektor 1 | ▪ Detektor 5 / Detektor 1 | ▪ Detektor 6 / Detektor 1 | ▪ Detektor 7 / Detektor 1 |
| Detektor 2 | ▪ Detektor 1 /Detektor 2 | 1 | ▪ Detektor 3 / Detektor 2 | ▪ Detektor 4 / Detektor | ▪ Detektor 5 / Detektor 2 | ▪ Detektor 6 / Detektor 2 | ▪ Detektor 7 / Detektor 2 |
| Detektor 3 | ▪ Detektor 1/Detektor 3 | ▪ Detektor 2 / Detektor 3 | 1 | ▪ Detektor 4 / Detektor 3 | ▪ Detektor 5 / Detektor 3 | ▪ Detektor 6 / Detektor 3 | ▪ Detektor 7 / Detektor 3 |
| Detektor 4 | ▪ Detektor 1 / Detektor 4 | ▪ Detektor 2 / Detektor 4 | ▪ Detektor 3 / Detektor 4 | 1 | ▪ Detektor 5 / Detektor 4 | ▪ Detektors 6 / aεiektr4 | ▪ Detektor 7 / Detektor 4 |
| Detektor 5 | ▪ Detektor 1 / Detektor 5 | ▪ Detektor 2 / Detektor 5 | ▪ Detektor 3 / Detektor 5 | ▪ Detektor 4 / Detektor 5 | 1 | ▪ Detektor 6 / Detektor 5 | ▪ Detektor 7 / Detektor 5 |
| Detektor 6 | ▪ Detektor 1 / Detektor 6 | ▪ Detektor 2 / Detektor 6 | ▪ Detektor 3 / Detektor 6 | ▪ Detektor 4 / Detektor 6 | ▪ Detektor 5 / Detektor 6 | 1 | ▪ Detektor 7 / Detektor 6 |
| Detektor7 | ▪ Detektor 1 / Detektor 7 | ▪ Detektor 2/ Detektor7 | ▪ Detektor 3 / Detektor 7 | ▪ Detektor 4 / Detektor 7 | ▪ Detektors 5 / Detektor 7 | ▪ Detektor 6 / Detektor 7 | 1 |

## Patentansprüche

1. Verfahren zur Analyse und Erkennung einer Probe oder von Eigenschaften einer Probe durch Erstellen einer Signatur der Probe durch Messung von Chemilumineszenz und induzierter Lumineszenz mit Hilfe mehrerer Detektoren, wobei die Probe eine Lebensmittelprobe, Gewebeprobe oder Körperflüssigkeit von Menschen oder Tieren, organisches Material, Kulturen von eukaryotischem oder prokaryotischem Material ist umfassend die Schritte:
a) Messen der induzierten Lumineszenz der Probe bei einer oder bei mehreren Wellenlängen nach Anregung, wobei eine Vielzahl von Messwerten über die Zeit bestimmt wird; und
b) Messen der Chemilumineszenz der Probe bei einer oder bei mehreren Wellenlängen, wobei eine Vielzahl von Messwerten über die Zeit bestimmt wird;
c) Erstellen einer Signatur der Probe durch in Beziehung setzen der Messwerte, durch Berechnung der Relativwerte aus den Messwerten, wodurch die Signatur unter in Verbindung stellen der Signale der einzelnen Detektoren erstellt wird;
d) Vergleichen der Signatur der Probe mit Signaturen von bekannten Proben aus einer Datenbank;
e) Identifizieren oder Bestimmen der Probe oder Eigenschaften der Probe auf Basis der Übereinstimmung der gemäß Schritten a) bis c) erhaltenen Signatur mit Signaturen aus der Datenbank.

2. Verfahren nach Anspruch 1, wobei eine direkte Messung der induzierten Lumineszenz der Probe und der Chemilumineszenz der Probe direkt an der Probe erfolgt.

3. Verfahren nach Anspruch 1 oder 2, wobei die Probe keine DNA und/oder RNA Arrays sind und/oder die Messung nicht mit Hilfe einer Sonde, insbesondere keine DNA und/oder RNA Sonde, erfolgt.

4. Verfahren nach einem der vorherigen Ansprüche, wobei es sich um ein automatisiertes Verfahren zur Erkennung einer Probe oder Eigenschaften eine Probe handelt.

5. Verfahren nach einem der vorherigen Ansprüche zur Verwendung zur Bestimmung metabolischer Eigenschaften der Probe.

6. Verfahren nach einem der vorherigen Ansprüche, zur Verwendung zur Bestimmung des Zustandes der Probe, insbesondere das Alter der Probe, der Vitalität, den zellulären Aktivitäten und dem metabolischen Zustand von lebenden Organismen in der Probe, oder zur Verwendung zur Bestimmung der Pathologie von Gewebe oder Zellen.

7. Verfahren nach einem der vorherigen Ansprüche, **dadurch gekennzeichnet, dass** die Erstellung der Signatur mittels Erstellen von Trennwerten, neuronaler Netzwerke, statistischer Analysen, Mustererkennung, Clusteranalyse oder Klassifizierungsverfahren, Support Vektor Maschinen oder anderen Methoden des Überwachtem Lernen sowie Unüberwachtem Lernen, Fractalanalysen oder anderen Klassifizierungssystemen, Quantifizierungssystemen oder Abstufungssystemen, erfolgt.

8. Verfahren nach einem der vorherigen Ansprüche, **dadurch gekennzeichnet, dass** zur Erstellung der Signatur neben den in Schritt a) und b) gemessenen Werten weitere physikalische, chemische, biologische Eigenschaften der Probe erfasst werden.

9. Verfahren nach einem der vorherigen Ansprüche, wobei die Signatur unter Verwendung eines Computerprogramms mit Programmcodemitteln erfolgt, insbesondere auf einem maschinenlesbaren Träger gespeichert, wobei das Computerprogramm auf einem oder mehreren Rechnern ausgeführt wird.

10. Verfahren nach Anspruch 9, wobei das Computerprogramm in einem Computer lesbaren Speichermedium enthalten ist.

11. System zur Analyse und/oder Erkennung einer Probe oder Eigenschaften einer Probe mit einer Vorrichtung zur direkten Messung der induzierten Lumineszenz und Chemilumineszenz einer Probe, sowie einer Datenverarbeitungseinheit umfassend ein Computerprogramm und eine Datenbank enthaltend bekannte Signaturen, wobei das System ausgelegt ist zur Durchführung des Verfahrens nach Anspruch 9.

## Claims

1. Method for analysing and recognizing a sample or properties of a sample by creating a signature of the sample by measurement of chemiluminescence and induced luminescence with the aid of multiple detectors, wherein the sample is a food sample, tissue sample or body fluid from humans or animals, organic material, cultures of eukaryotic or prokaryotic material, comprising the steps:
a) measuring the induced luminescence of the sample at one wavelength or at multiple wavelengths after excitation, wherein a multiplicity of measurement values is determined over time; and
b) measuring the chemiluminescence of the sample at one wavelength or at multiple wavelengths, wherein a multiplicity of measurement values is determined over time;
c) creating a signature of the sample by relating the measurement values, by calculation of the relative values from the measurement values, the result being that the signature is created with linking of the signals from the individual detectors;
d) comparing the signature of the sample with signatures of known samples from a database;
e) identifying or determining the sample or properties of the sample on the basis of the agreement of the signature obtained according to steps a) to c) with signatures from the database.

2. Method according to Claim 1, wherein a direct measurement of the induced luminescence of the sample and of the chemiluminescence of the sample is carried out directly on the sample.

3. Method according to Claim 1 or 2, wherein the sample is not DNA and/or RNA arrays and/or the measurement is not carried out with the aid of a probe, especially no DNA and/or RNA probe.

4. Method according to any of the preceding claims, wherein the method is an automated method for recognizing a sample or properties of sample.

5. Method according to any of the preceding claims for use in determining metabolic properties of the sample.

6. Method according to any of the preceding claims for use in determining the state of the sample, especially the age of the sample, the viability, the cellular activities and the metabolic state of living organisms in the sample, or for use in determining the pathology of tissue or cells.

7. Method according to any of the preceding claims, **characterized in that** the signature is created by means of creation of cut-off values, neuronal networks, statistical analyses, pattern recognition, cluster analysis or classification methods, support vector machines or other methods of supervised learning and unsupervised learning, fractal analyses or other classification systems, quantification systems or grading systems.

8. Method according to any of the preceding claims, **characterized in that** further physical, chemical and biological properties of the sample are captured in addition to the values measured in step a) and b) for the creation of the signature.

9. Method according to any of the preceding claims, wherein the signature is effected using a computer program with program code means, stored especially on a machine-readable carrier, wherein the computer program is executed on one or more computers.

10. Method according to Claim 9, wherein the computer program is contained in a computer-readable storage medium.

11. System for analysing and/or recognizing a sample or properties of a sample, having a device for the direct measurement of the induced luminescence and chemiluminescence of a sample and having a data-processing unit comprising a computer program and a database containing known signatures, wherein the system is designed for carrying out the method according to Claim 9.

## Revendications

1. Procédé, destiné à l'analyse et à l'identification d'un échantillon ou de propriétés d'un échantillon par établissement d'une signature de l'échantillon par mesure de chimioluminescence et de luminescence induite à l'aide de plusieurs détecteurs, l'échantillon étant un échantillon d'aliment, un échantillon de tissu ou un fluide corporel d'êtres humains ou d'animaux, de la matière organique, des cultures de matière eucaryote ou procaryote, comprenant les étapes :
a) de la mesure de la luminescence induite de l'échantillon à une ou à plusieurs longueurs d'onde après excitation, sachant qu'une pluralité de valeurs mesurées est déterminée dans le temps ; et
b) de la mesure de la chimioluminescence de l'échantillon à une ou à plusieurs longueurs d'onde, sachant qu'une pluralité de valeurs mesurées est déterminée dans le temps ;
c) de l'établissement d'une signature de l'échantillon, par mise en relation des valeurs mesurées, par calcul des valeurs relatives à partir des valeurs mesurées, suite à quoi, la signature est établie par mise en liaison des signaux des détecteurs individuels ;
d) de la comparaison de la signature de l'échantillon avec des signatures d'échantillons connus émanant d'une base de données ;
e) de l'identification ou de la détermination de l'échantillon ou de propriétés de l'échantillon sur la base de la concordance de la signature obtenue selon les étapes a) à c) avec des signatures issues de la base de données.

2. Procédé selon la revendication 1, une mesure directe de la luminescence induite de l'échantillon et de la chimioluminescence de l'échantillon étant effectuée directement sur l'échantillon.

3. Procédé selon la revendication 1 ou 2, sachant que les échantillons ne sont pas des puces à ADN et/ou des puces à ARN et/ou la mesure ne s'effectue pas à l'aide d'une sonde, notamment d'aucune sonde ADN et/ou ARN.

4. Procédé selon l'une quelconque des revendications précédentes, sachant qu'il s'agit d'un procédé automatisé destiné à l'identification d'un échantillon ou de propriétés d'un échantillon.

5. Procédé selon l'une quelconque des revendications précédentes, utilisé pour déterminer des propriétés métaboliques de l'échantillon.

6. Procédé selon l'une quelconque des revendications précédentes, utilisé pour déterminer l'état de l'échantillon, notamment l'âge de l'échantillon, la vitalité, les activités cellulaires et l'état métabolique d'organismes vivants dans l'échantillon, ou utilisé pour déterminer la pathologie de tissus ou de cellules.

7. Procédé selon l'une quelconque des revendications précédentes, **caractérisé en ce que** l'établissement de la signature s'effectue par établissement de césures de réseaux neuronaux, d'analyses statistiques, de reconnaissance d'un modèle, de partitionnement de données ou de procédés de classification, de machines à vecteurs de support ou d'autres méthodes de l'apprentissage supervisé, ainsi que de l'apprentissage non supervisé, d'analyses fractionnaires ou d'autres systèmes de classification, systèmes de quantification ou systèmes de gradation.

8. Procédé selon l'une quelconque des revendications précédentes, **caractérisé en ce que** pour l'établissement de la signature, parallèlement aux valeurs mesurées dans l'étape a) et b), d'autres propriétés physiques, chimiques, biologiques de l'échantillon sont enregistrées.

9. Procédé selon l'une quelconque des revendications précédentes, la signature s'effectuant en utilisant un programme informatique avec des moyens de code de programmation, mémorisé notamment sur un support lisible par machine, le programme informatique étant exécuté sur un ou sur plusieurs ordinateurs.

10. Procédé selon la revendication 9, le programme informatique étant contenu dans un milieu de mémoire lisible par informatique.

11. Système, destiné à l'analyse et/ou à l'identification d'un échantillon ou de propriétés d'un échantillon, doté d'un dispositif pour la mesure directe de la luminescence induite et de la chimioluminescence d'un échantillon, ainsi que d'un ensemble de traitement de données, comprenant un programme informatique et une base de données contenant des signatures connues, le système étant conçu pour réaliser le procédé selon la revendication 9.
